# EUROPEAN PATENT SPECIFICATION

(11) **EP 2 170 003 B1**
(45) Date of publication and mention of the grant of the patent: **03.05.2017**
(21) Application number: 09004049.4
(22) Date of filing: 20.03.2009
(51) Int. Cl.: H04W 48/20, H04W 48/16, H04W 88/02

(54) **Mobile terminal and method for accessing wireless internet of mobile terminal**
Mobiles Endgerät und Verfahren für den drahtlosen Internetzugang von mobilen Endgeräten
Terminal mobile et procédé d'accès Internet sans fil de terminal mobile

(30) Priority: 25.09.2008 KR 20080094363
(43) Date of publication of application: 31.03.2010
(73) Proprietor: LG Electronics Inc., Yeongdeungpo-gu Seoul 150-010 (KR)
(72) Inventor: Lee, Seung-Sun, Seongbuk-Gu Seoul (KR); Lee, Bum-Suk, Dongan-Gu, Anyang, Gyeonggi-Do (KR)
(74) Representative: Katérle, Axel

(56) References cited:
- WO-A2-2006/100653
- US-A1- 2007 066 304
- US-A1- 2008 057 978
- US-A1- 2008 198 811

## Description

### BACKGROUND OF THE INVENTION

### 1. Field of the Invention

The present invention relates to a method for accessing the wireless Internet of a mobile terminal to improve user convenience in accessing the wireless Internet, and a mobile terminal for implementing the same.

### 2. Discussion of the Background Art

Terminals may be divided into a mobile terminal (portable terminal) and a stationary terminal according to whether the terminal is portable or not. The mobile terminals may be divided into a handheld terminal that can be directly carried around and a vehicle mount terminal.

According to diversification of functions, the terminals are implemented in the form of multimedia players having complex functions such as capturing images or video, reproducing music or video files, playing games, receiving broadcasts, etc.

In order to support or increase the functions of the terminals, modifications of structural parts and/or software parts of the terminals may be taken into consideration.

Of such terminals, the mobile terminal may have a wireless Internet module and may access the Internet by using the wireless Internet module. When the Internet is accessed by using the mobile terminal, generally, settings related to activation of the wireless Internet module is made and then software for the Internet connection is executed.

US 2008/198811 discloses an access terminal configured to scan for nearby access points and to maintain a candidate list of access points. When commencing Wifi operations (upon power up, reset, loss of Wifi connectivity, or invocation of periodic background Wifi searches), the terminal determines its location to determine whether it may scan access points. For example, it determines which country it is in so that it can scan the proper channels for that country. The terminal may save information about access points identified by the terminal, and may scan on a repeated basis. The list of access points may be prioritized according to points most recently used or those which have already been connected to by the user, or those which provide the best connectivity. Searches may be triggered by a timer or in response to an action such as activating a user input, opening a cover of the terminal, inbound/outbound calls being made, or sessions being commenced. Based on a location of a terminal, a scan list is generated, and access points on that scan list only are scanned. If a scan generates no results, a time between scans may be increased to conserve power. If candidates are generated, the terminal scans at intervals to keep an updated list of access points. If Wifi coverage is lost, the terminal may switch to an unassociated state after a specified number of failed attempts to identify another access point.

US 2007/066304 discloses to select an access point having a high quality connection or a higher priority from a list of access points.

WO 2006/100653 discloses a scanning apparatus of a wireless device, wherein a scan for a wireless access point is initiated in response to a change in geographical location of the wireless device. A plurality of stored access points associated with a plurality of stored geographic locations, and the device scans for a stored access point when it is determined that the location of the wireless device is associated with the stored access point.

US 2008/057978 discloses a wireless terminal configured for spatial mapping of wireless access points, wherein the terminal displays a spatial map to a user comprising information of a physical feature within the vicinity of the terminal and an access point, and is operable to present a connection authorization request to the user to connect to the access point.

US 2008/057958 discloses a wireless terminal configured to categorize wireless access points according to filter parameters such as non-paying and paying access points, and the terminal selectively connects to an access point that has passed the filter parameter.

### SUMMARY OF THE INVENTION

Therefore, an object of the present invention is to provide a method for accessing the wireless Internet of a mobile terminal capable of simplifying setting steps for Internet access when the wireless Internet is accessed by using the mobile terminal, to thus improve user convenience.

To achieve these and other advantages and in accordance with the purpose of the present invention, a method for accessing the wireless Internet of a mobile terminal and a mobile terminal according to the appended independent claims are provided.

The foregoing and other objects, features, aspects and advantages of the present invention will become more apparent from the following detailed description of the present invention when taken in conjunction with the accompanying drawings.

### BRIEF DESCRIPTION OF THE DRAWINGS

The accompanying drawings, which are included to provide a further understanding of the invention and are incorporated in and constitute a part of this specification, illustrate embodiments of the invention and together with the description serve to explain the principles of the invention.

In the drawings:
FIG. 1 is a block diagram of a mobile terminal according to an embodiment of the present invention.
FIG. 2A is a front perspective view of the mobile terminal according to an embodiment of the present invention.
FIG. 2B is a rear perspective view of the mobile terminal according to an embodiment of the present invention.
FIGs. 3A and 3B are front views of the mobile terminal for explaining an operation state of the mobile terminal according to the present invention.
FIG. 4 is a conceptual view for explaining a proximity depth of a proximity sensor.
FIG. 5 is a conceptual view for explaining a control method with respect to a touch operation in a state that a pair of display units overlap.
FIGs. 6A and 6B are conceptual views for explaining a proximity touch recognition region where a proximity signal is detected and a haptic region where a haptic effect is generated, respectively.
FIG. 7 is a flow chart of a method for accessing the wireless Internet of the mobile terminal according to an embodiment of the present invention.
FIGs. 8 to 13 are views showing examples of accessing the wireless Internet by executing a browser of the mobile terminal according to an embodiment of the present invention.
FIG. 14 is a view showing an example of searching an access point (AP) by using map data including location information of APs according to an embodiment of the present invention.
FIGs. 15A and 15B are views showing examples of re-searching an AP when a selected AP is not actually searched/connected according to an embodiment of the present invention.
FIG. 16 is a view showing an example of displaying an actual AP search result according to an embodiment of the present invention.
FIGs. 17A and 17B are views showing a case of detecting a change in the location of the mobile terminal after the wireless Internet module is deactivated because an AP has not been found in the searching step according to an embodiment of the present invention.

### DETAILED DESCRIPTION OF THE INVENTION

A mobile terminal and its methods according to exemplary embodiments of the present invention will now be described with reference to the accompanying drawings. In the following description, usage of suffixes such as 'module', 'part' or 'unit' used for referring to elements is given merely to facilitate explanation of the present invention, without having any significant meaning by itself.

The mobile terminal according to the present invention may include mobile phones, smart phones, notebook computers, digital broadcast terminals, PDAs (Personal Digital Assistants), PMPs (Portable Multimedia Player), navigation devices, MP3 players, etc.

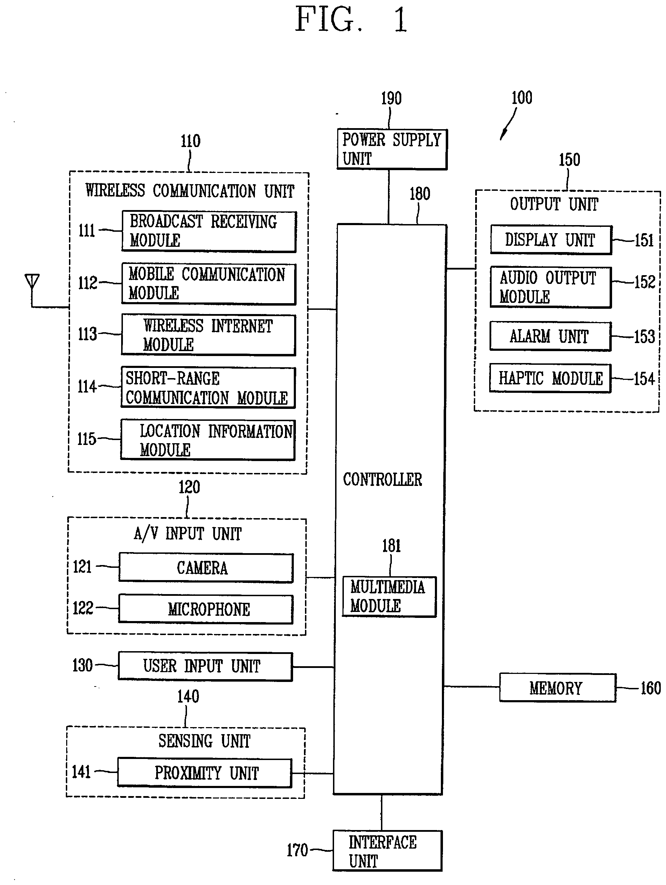

FIG. 1 is a block diagram of an example of a mobile terminal 100 in accordance with an embodiment of the present invention.

The mobile terminal 100 may include a wireless communication unit 110, an A/V (Audio/Video) input unit 120, a user input unit 130, a sensing unit 140, an output unit 150, a memory or storage unit 160, an interface unit 170, a controller 180, and a power supply unit 190, etc. The components as shown in FIG. 1 are not a requirement, and greater or fewer components may alternatively be implemented. All components of the mobile terminal 100 are operatively coupled and configured.

The components will be described in detail as follows.

The wireless communication unit 110 may include one or more components allowing radio communication between the mobile terminal 100 and a wireless communication system or a network in which the mobile terminal is located. For example, the wireless communication unit may include a broadcast receiving module 111, a mobile communication module 112, a wireless Internet module 113, a short-range communication module 114, and a location information module 115, etc.

The broadcast receiving module 111 receives broadcast signals and/or broadcast associated information from an external broadcast management server or other network entity or mobile terminal via a broadcast channel.

The broadcast channel may include a satellite channel and a terrestrial channel. The broadcast management server may refer to a server that generates and transmits a broadcast signal and/or broadcast associated information or a server that receives a previously generated broadcast signal and/or broadcast associated information and transmits the same to a terminal. The broadcast signal may include not only a TV broadcast signal, a radio broadcast signal and a data broadcast signal, but also a broadcast signal obtained by combining a data broadcast signal to the TV or radio broadcast signal.

The broadcast associated information may be information related to a broadcast channel, a broadcast program or a broadcast service provider. The broadcast associated information may be provided via a mobile communication network. In this case, the broadcast associated information may be received by the mobile communication module 112.

The broadcast associated information may exist in various forms. For example, it may exist in the form of an electronic program guide (EPG) of digital multimedia broadcasting (DMB), electronic service guide (ESG) of digital video broadcast-handheld (DVB-H), etc.

The broadcast receiving module 111 may receive digital broadcast signals by using digital broadcast systems such as multimedia broadcasting-terrestrial (DMB-T), digital multimedia broadcasting-satellite (DMB-S), media forward link only (MediaFLO^{®}), digital video broadcast-handheld (DVB-H), integrated services digital broadcast-terrestrial (ISDB-T), etc. The broadcast receiving module 111 may be configured to be suitable for any other broadcast systems as well as the above-described digital broadcast systems.

Broadcast signals and/or broadcast-associated information received via the broadcast receiving module 111 may be stored in the memory 160.

The mobile communication module 112 transmits and receives radio signals to and from at least one of a base station, an external terminal and a server. Such radio signals may include a voice call signal, a video call signal or various types of data according to text/multimedia message transmission and reception.

The wireless Internet module 113 refers to a module for a wireless Internet access. This module may be internally or externally coupled to the terminal. The wireless Internet technique may include a WLAN (Wireless LAN) (Wi-Fi), Wibro (Wireless broadband), Wimax (World Interoperability for Microwave Access), HSDPA (High Speed Downlink Packet Access), etc.

The short-range communication module 114 refers to a module for short-range communication. As the short range communication technologies, Bluetooth, radio frequency identification (RFID), infrared data association (IrDA), ultra-wideband (UWB), ZigBee, etc. may be used.

The location information module 115 is a module for checking or acquiring a location of the mobile terminal. A GPS (Global Positioning System) module is a typical example of the location information module 115.

With reference to FIG. 1, the A/V input unit 120 is configured to receive an audio and/or video signal. The A/V input unit 120 may include a camera 121, a microphone 122, etc. The camera 121 processes image frames of still pictures or video or other moving images. The processed image frames or the like may be displayed on a display unit 151.

The image frames processed by the camera 121 may be stored in the memory 160 and/or transmitted to outside via the wireless communication unit 110. Two or more cameras 121 may be provided according to a usage environment.

The microphone 122 receives an external audio signal while in a phone call mode, a recording mode, a voice recognition mode, etc., and processes it into electrical audio data. The processed audio data may be converted for output into a format transmittable to a mobile communication base station via the mobile communication module 112 in case of the phone call mode. The microphone 122 may include various types of noise canceling algorithms to cancel noise generated in the course of receiving and transmitting external audio signals.

The user input unit 130 generates input data to control an operation of the mobile terminal. The user input unit 130 may include a keypad, a dome switch, a touch pad (e.g., static pressure/capacitance), a jog wheel, a jog switch, etc.

The sensing unit 140 detects a current status of the mobile terminal 100 such as an opened or closed state of the mobile terminal 100, a location of the mobile terminal 100, a presence or absence of user contact with the mobile terminal 100, orientation of the mobile terminal 100, an acceleration or deceleration movement of the mobile terminal 100, etc., and generates a sensing signal for controlling the operation of the mobile terminal 100. For example, when the mobile terminal 100 is a slide type mobile phone, the sensing unit 140 may sense whether the slide phone is opened or closed. In addition, the sensing unit 140 can detect whether or not the power supply unit 190 supplies power or whether or not the interface unit 170 is coupled with an external device. The sensing unit 140 may include a proximity sensor 141.

The output unit 150 generates an output related to the sense of sight, the sense of hearing or the sense of touch and may include the display unit 151, the audio output module 152, the alarm unit 153, and a haptic module 154.

The display unit 151 displays (outputs) information processed in the mobile terminal 100. For example, when the mobile terminal 100 is in a phone call mode, the display unit 151 displays a User Interface (UI) or a Graphic User Interface (GUI) associated with a call. When the mobile terminal 100 is in a video call mode or image capturing mode, the display unit 151 may display a captured image and/or received image, a UI or GUI.

The display unit 151 may include at least one of a Liquid Crystal Display (LCD), a Thin Film Transistor-LCD (TFT-LCD), an Organic Light Emitting Diode (OLED), a flexible display and a three-dimensional (3D) display. Some of them may be configured to be transparent to allow viewing of the exterior therethrough, which may be called transparent displays. A typical transparent display may be, for example, a TOLED (Transparent Organic Light Emitting Diode), or the like. The rear structure of the display unit 151 may include the light transmissive structure. With such a structure, the user can view an object located at a rear side of the terminal body through the region occupied by the display unit 151 of the terminal body.

The mobile terminal 100 may include two or more display units according to its embodiment. For example, a plurality of display units may be separately or integrally disposed on one surface or disposed on both surfaces of the mobile terminal, respectively.

Meanwhile, when the display unit 151 and a sensor (referred to as a 'touch sensor', hereinafter) are overlaid in a layered manner (referred to as a 'touch screen', hereinafter), the display unit 151 may be used as both an input device and an output device. The touch sensor may have the form of, for example, a touch film, a touch sheet, a touch pad, etc.

The touch sensor may be configured to convert a pressure applied to a particular portion of the display unit 151 or a change in capacitance at a particular portion of the display unit 151 into an electrical input signal. The touch sensor may be configured to detect the pressure when a touch is applied, as well as a touched position or area.

When a touch with respect to the touch sensor is inputted, corresponding signals are transmitted to a touch controller. The touch controller processes the signals and transmit corresponding data to the controller 180. Thus, the controller 180 can recognize which portion of the display unit 151 has been touched.

With reference to FIG. 1, the proximity sensor 141 may be disposed within the mobile terminal covered by the touch screen or near the touch screen. The proximity sensor 141 refers to a sensor for detecting the presence or absence of an object that accesses a certain detection surface or an object that exists nearby by using the force of electromagnetism or infrared rays without a mechanical contact. Thus, the proximity sensor 141 has a longer life span compared with a contact type sensor, and it can be utilized for various purposes.

The example of the proximity sensor 141 may be a transmission type photo sensor, a direct reflection type photo sensor, a mirror-reflection type photo sensor, an RF oscillation type proximity sensor, a capacitance type proximity sensor, a magnetic proximity sensor, an infrared proximity sensor, etc. When the touch screen is an electrostatic type touch screen, an approach of the pointer is detected based on a change in an electric field according to the approach of the pointer. In this case, the touch screen (touch sensor) may be classified as a proximity sensor.

In the following description, for the sake of brevity, recognition of the pointer positioned to be close to the touch screen without being contacted will be called a 'proximity touch', while recognition of actual contacting of the pointer on the touch screen will be called a 'contact touch'. In this case, when the pointer is in the state of the proximity touch, it means that the pointer is positioned to correspond vertically to the touch screen.

The proximity sensor 141 detects a proximity touch and a proximity touch pattern (e.g., a proximity touch distance, a proximity touch speed, a proximity touch time, a proximity touch position, a proximity touch movement state, or the like), and information corresponding to the detected proximity touch operation and the proximity touch pattern can be outputted to the touch screen.

The audio output module 152 may output audio data received from the wireless communication unit 110 or stored in the memory 160 in a call signal reception mode, a call mode, a record mode, a voice recognition mode, a broadcast reception mode, and the like. Also, the audio output module 152 may provide audible outputs related to a particular function (e.g., a call signal reception sound, a message reception sound, etc.) performed in the mobile terminal 100. The audio output module 152 may include a receiver, a speaker, a buzzer, etc.

The alarm unit 153 outputs a signal for informing about an occurrence of an event of the mobile terminal 100. Events generated in the mobile terminal may include call signal reception, message reception, key signal inputs, a touch input etc. In addition to video or audio signals, the alarm unit 153 may output signals in a different manner, for example, to inform about an occurrence of an event. The video and/or audio signals may be also outputted via the audio output module 152, so the display unit 151 and the audio output module 152 may be classified as parts of the alarm unit 153.

The haptic module 154 generates various tactile effects the user may feel. A typical example of the tactile effects generated by the haptic module 154 is vibration. The strength and pattern of the haptic module 154 can be controlled. For example, different vibrations may be combined to be outputted or sequentially outputted.

Besides vibration, the haptic module 154 may generate various other tactile effects such as an effect by stimulation such as a pin arrangement vertically moving with respect to a contact skin, a spray force or suction force of air through a jet orifice or a suction opening, a contact on the skin, a contact of an electrode, electrostatic force, etc., an effect by reproducing the sense of cold and warmth using an element that can absorb or generate heat.

The haptic module 154 may be implemented to allow the user to feel a tactile effect through a muscle sensation such as fingers or arm of the user, as well as transferring the tactile effect through a direct contact. Two or more haptic modules 154 may be provided according to the configuration of the mobile terminal 100.

The memory 160 may store software programs used for the processing and controlling operations performed by the controller 180, and may temporarily store data (e.g., a phonebook, messages, still images, video, etc.) that are inputted or outputted. In addition, the memory 160 may store data regarding various patterns of vibrations and audio signals outputted when a touch is inputted to the touch screen.

The memory 160 may include at least one type of storage medium including a Flash memory, a hard disk, a multimedia card micro type, a card-type memory (e.g., SD or DX memory, etc), a Random Access Memory (RAM), a Static Random Access Memory (SRAM), a Read-Only Memory (ROM), an Electrically Erasable Programmable Read-Only Memory (EEPROM), a Programmable Read-Only memory (PROM), a magnetic memory, a magnetic disk, and an optical disk. Also, the mobile terminal 100 may be operated in relation to a web storage device that performs the storage function of the memory 160 over the Internet.

The interface unit 170 serves as an interface with every external device connected with the mobile terminal 100. For example, the external devices may transmit data to an external device, receive and transmit power to each element of the mobile terminal 100, or transmit internal data of the mobile terminal 100 to an external device. For example, the interface unit 170 may include wired or wireless headset ports, external power supply ports, wired or wireless data ports, memory card ports, ports for connecting a device having an identification module, audio input/output (I/O) ports, video I/O ports, earphone ports, or the like.

The identification module may be a chip that stores various information for authenticating the authority of using the mobile terminal 100 and may include a user identity module (UIM), a subscriber identity module (SIM) a universal subscriber identity module (USIM), and the like. In addition, the device having the identification module (referred to as 'identifying device', hereinafter) may take the form of a smart card. Accordingly, the identifying device may be connected with the terminal 100 via a port.

When the mobile terminal 100 is connected with an external cradle, the interface unit 170 may serve as a passage to allow power from the cradle to be supplied therethrough to the mobile terminal 100 or may serve as a passage to allow various command signals inputted by the user from the cradle to be transferred to the mobile terminal therethrough. Various command signals or power inputted from the cradle may operate as signals for recognizing that the mobile terminal is properly mounted on the cradle.

The controller 180 typically controls the general operations of the mobile terminal. For example, the controller 180 performs controlling and processing associated with voice calls, data communications, video calls, and the like. The controller 180 may include a multimedia module 181 for reproducing multimedia data. The multimedia module 181 may be configured within the controller 180 or may be configured to be separated from the controller 180.

The controller 180 may perform a pattern recognition processing to recognize a handwriting input or a picture drawing input performed on the touch screen as characters or images, respectively.

The power supply unit 190 receives external power or internal power and supplies appropriate power required for operating respective elements and components under the control of the controller 180.

Various embodiments described herein may be implemented in a computer-readable medium or its similar medium using, for example, software, hardware, or any combination thereof.

For hardware implementation, the embodiments described herein may be implemented by using at least one of application specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, electronic units designed to perform the functions described herein. In some cases, such embodiments may be implemented by the controller 180 itself.

For software implementation, the embodiments such as procedures or functions described herein may be implemented by separate software modules. Each software module may perform one or more functions or operations described herein. Software codes can be implemented by a software application written in any suitable programming language. The software codes may be stored in the memory 160 and executed by the controller 180.

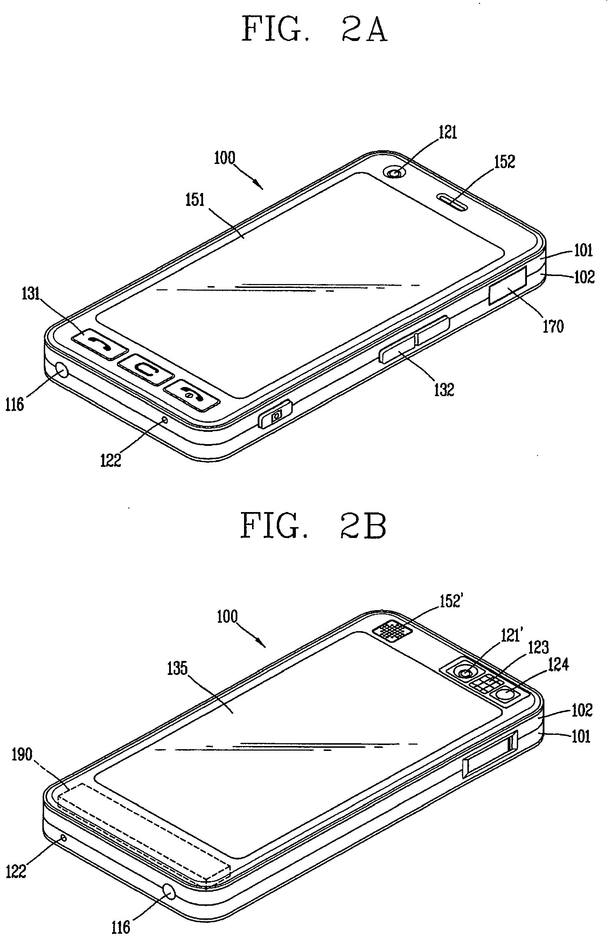

FIG. 2A is a front perspective view of one example of the mobile terminal 100 according to an embodiment of the present invention.

In this example, the mobile terminal 100 has a bar type terminal body. However, the present invention is not limited thereto and may be applicable to a slide type mobile terminal, a folder type mobile terminal, a swing type mobile terminal, a swivel type mobile terminal, etc, in which two or more bodies are combined to be relatively movable.

The body includes a case (or casing, housing, cover, etc.) constituting the external appearance. In this embodiment, the case may include a front case 101 and a rear case 102. Various electronic components are installed in the space between the front case 101 and the rear case 102. One or more intermediate cases may be additionally disposed between the front case 101 and the rear case 102.

The cases may be formed by injection-molding a synthetic resin or may be made of a metallic material such as stainless steel (STS) or titanium (Ti), etc.

The display unit 151, the audio output module 152, the camera 121, the user input unit 130 including manipulation units 131, 132, the microphone 122, the interface unit 170, etc. may be disposed mainly on the front case 101.

The display unit 151 takes most portion of a circumferential surface of the front case 101. The audio output module 152 and the camera 121 are disposed at a region adjacent to one end portion among both end portions of the display unit 151, and the manipulation unit 131 and the microphone 122 are disposed at a region adjacent to another end portion. The manipulation unit 132 and the interface unit 170 may be disposed at the sides of the front case 101 and the rear case 102.

The user input unit 130 is manipulated to receive a command for controlling the operation of the mobile terminal 100 and may include a plurality of the manipulation units 131 and 132. The manipulation units 131 and 132 may be generally referred to as a manipulating portion, and various methods and techniques can be employed for the manipulation portion so long as they can be operated by the user in a tactile manner.

Content inputted by the first and second manipulation units 131 and 132 can be variably set. For example, the first manipulation unit 131 may receive a command such as starting, ending, scrolling, etc., and the second manipulation unit 132 may receive a command such as controlling of the size of a sound outputted from the audio output module 152 or conversion into a touch recognition mode of the display unit 151.

FIG. 2B is a rear perspective view of the mobile terminal 100 as shown in FIG. 2A.

With reference to FIG. 2B, a camera 121' may additionally be disposed on the rear surface of the terminal body, namely, on the rear case 102. The camera 121' may have an image capture direction which is substantially opposite to that of the camera 121 (see FIG. 2A), and have a different number of pixels than the camera 121.

For example, the camera 121 may have a smaller number of pixels to capture an image of the user's face and transmit such image to another party, and the camera 121' may have a larger number of pixels to capture an image of a general object and not immediately transmit it in most cases. The cameras 121 and 121' may be installed on the terminal body such that they can be rotatable or popped up.

A flash 123 and a mirror 124 may be additionally disposed adjacent to the camera 121'. When an image of a subject is captured with the camera 121', the flash 123 illuminates the subject. The mirror 124 allows the user to see himself when he wants to capture his own image (i.e., self-image capturing) by using the camera 121'.

An audio output module 152' may be additionally disposed on the rear surface of the terminal body. The audio output module 152' may implement stereophonic sound functions in conjunction with the audio output module 152 (see FIG. 2A) and may be also used for implementing a speaker phone mode for call communication.

A broadcast signal receiving antenna 116 may be disposed at the side of the terminal body, in addition to an antenna that is used for mobile communications. The antenna 116 constituting a portion of the broadcast receiving module 111 (see FIG. 1) can also be configured to be retractable from the terminal body.

The power supply unit 190 for supplying power to the mobile terminal 100 is mounted on the terminal body. The power supply unit 190 may be installed within the terminal body or may be directly attached to or detached from the exterior of the terminal body.

A touch pad 135 for detecting a touch may be additionally mounted on the rear case 102. The touch pad 135 may be configured to be light transmissive like the display unit 151. In this case, when the display unit 151 is configured to output visual information from both sides thereof, the visual information may be recognized also via the touch pad 135. Alternatively, a display may be additionally mounted on the touch pad so that a touch screen may be disposed on the rear case 102.

The touch pad 135 is operated in association with the display unit 151 of the front case 101. The touch pad 135 may be disposed to be parallel on the rear side of the display unit 151. The touch pad 135 may have the same size as the display unit 151 or smaller.

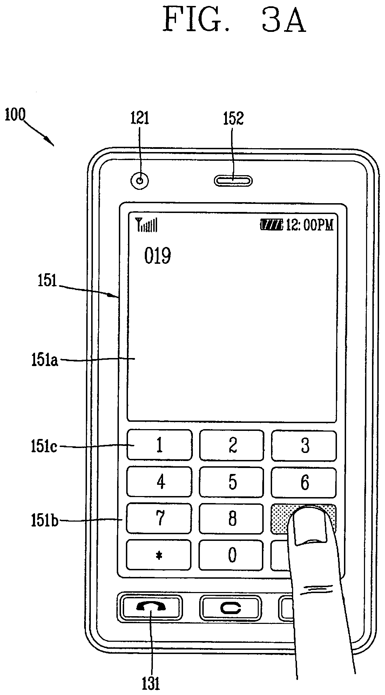

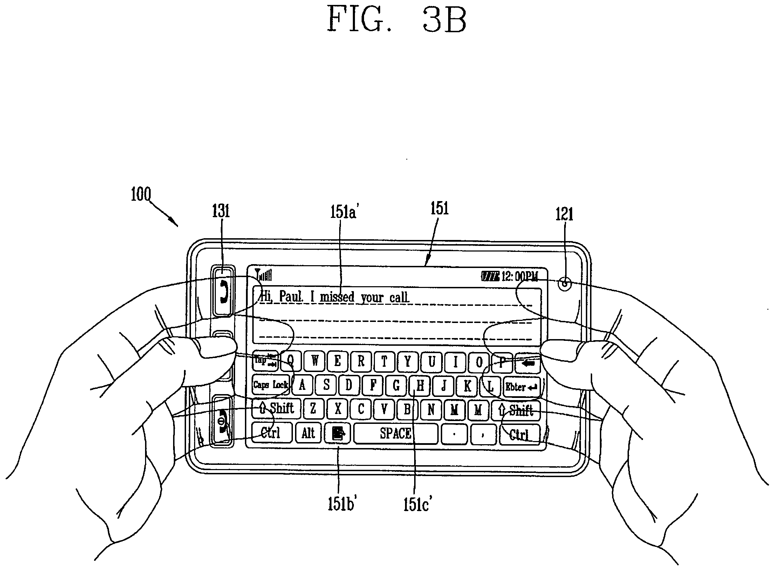

The associated operation method of the display unit 151 and the touch pad 135 will now be described with reference to FIGs. 3A and 3B.

FIGs. 3A and 3B are front views of the mobile terminal 100 for explaining an operation state of the mobile terminal according to an embodiment of the present invention.

Various types of visual information may be displayed on the display unit 151. The information may be displayed in the form of character, number, symbol, graphic, icon, etc.

In order to input the information, at least one of the character, number, symbol, graphic and icon is displayed in a certain arrangement so as to be implemented in the form of a keypad. Such keypad may be called 'soft keys'.

FIG. 3A shows the mobile terminal receiving a touch applied to a soft key on the front surface of the terminal body.

The display unit 151 may be operated as a whole region or may be divided into a plurality of regions and accordingly operated. In the latter case, the plurality of regions may be operated in association with each other.

For example, an output window 151a and an input window 151b may be displayed at upper and lower portions of the display unit 151, respectively. Soft keys 151 c including numbers for inputting a phone number or the like are outputted on the input window 151b. When the soft key 151c is touched, a number corresponding to the touched soft key is displayed on the output window 151 a. When the first manipulation unit 131 is manipulated, a call connection with respect to a phone number displayed on the output window 151 a can be attempted.

FIG. 3B shows the mobile terminal receiving of a touch applied to the soft key through the rear surface of the terminal body. If FIG. 3A shows a portrait view in which the terminal body is disposed vertically, FIG. 3B shows a landscape view in which the same terminal body is disposed horizontally. The display unit 151 may be configured to convert an output screen image according to the disposition direction of the terminal body.

FIG. 3B shows an example of an operation of a text input mode in the mobile terminal 100. An output window 151 a' and an input window 151b' are displayed on the display unit 151. A plurality of soft keys 151c' including at least one of characters, symbols and numbers may be arranged on the input window 151 b'. The soft keys 151 c' may be arranged in the form of Qwerty keys.

When the soft keys 151c' are touched through the touch pad 135, characters, numbers, symbols, or the like corresponding to the touched soft keys are displayed on the output window 151 a'. Compared with a touch input through the display unit 151, a touch input through the touch pad 135 can advantageously prevent the soft keys 151 c' from being covered by user's fingers when touching is made. When the display unit 151 and the touch pad 135 are formed to be transparent, the user's fingers put on the rear surface of the terminal body can be viewed with naked eyes, so the touch input can be more accurately performed.

Besides the input methods presented in the above-described embodiments, the display unit 151 or the touch pad 135 may be configured to receive a touch through scrolling. The user may move a cursor or a pointer positioned on an entity, e.g., an icon or the like, displayed on the display unit 151 by touch-scrolling the display unit 151 or the touch pad 135. In addition, when the user moves his fingers on the display unit 151 or the touch pad 135, the path along which the user's fingers move may be visually displayed on the display unit 151. This would be useful in editing an image displayed on the display unit 151.

One function of the terminal may be executed in case where the display unit 151 (touch screen) and the touch pad 135 are touched together within a certain time range. The both touches may be clamping the terminal body with the user's thumb and index finger. The one function may be, for example, activation or deactivation of the display unit 151 or the touch pad 135.

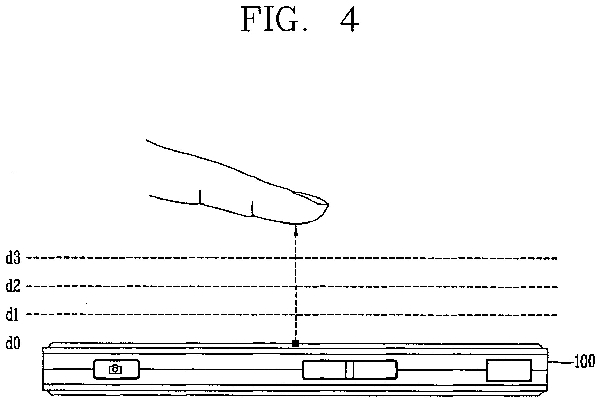

The proximity sensor 141 will now be described in detail with reference to FIGs.1 and 4.

FIG. 4 is an example of a conceptual view for explaining the depth of proximity of the proximity sensor of the mobile terminal according to the present invention.

As shown in FIG. 4, when a pointer such as the user's finger, a pen, or the like, approaches the touch screen of the mobile terminal, the proximity sensor 141 disposed within or near the touch screen detects it and outputs a proximity signal.

The proximity sensor 141 may be configured to output a different proximity signal according to the distance (referred to as a 'proximity depth', hereinafter) between the closely touched pointer and the touch screen.

FIG. 4 shows the section of the touch screen with the proximity sensor for detecting, for example, three proximity depths. The proximity sensor may detect three or less or four or more proximity depths.

In detail, when the pointer is perfectly brought into contact with the touch screen (distance = d0), it is recognized as a contact touch. When the pointer is positioned to be spaced apart by shorter than a distance d1 on the touch screen, it is recognized as a proximity touch with a first proximity depth. If the pointer is positioned to be spaced apart by the distance longer than the distance d1 but shorter than a distance d2 on the touch screen, it is recognized as a proximity touch with a second proximity depth. If the pointer is positioned to be spaced apart by the distance longer than the distance d2 but shorter than a distance d3, it is recognized as a proximity touch with a third proximity depth. If the pointer is positioned to be spaced apart by longer than the distance d3 on the touch screen, it is recognized that the proximity touch has been released or there is no proximity touch.

Accordingly, the controller 180 may recognize the proximity touches as various input signals according to the proximity depths and proximity positions of the pointer, and may control various operations according to the various input signals.

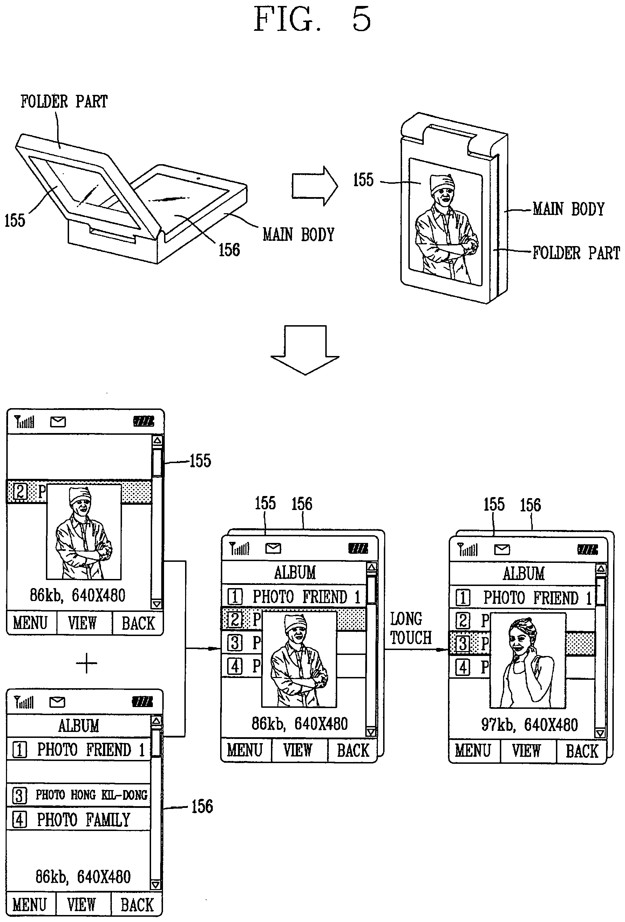

FIG. 5 is a conceptual view for explaining a method for controlling a touch operation in a configuration that a pair of display units 155 and 156 of a mobile terminal overlap with each other according to an embodiment of the present invention.

As an example, the terminal shown in FIG. 5 is a folder type terminal in which a folder part is foldably connected with the main body. The first display unit 155 mounted on the folder part may be light-transmissive or transparent, such as a TOLED, while the second display unit 156 mounted on the main body may not allow light transmission, such as an LCD. The first and second display units 155 and 156 may be configured as a touch screen through which a touch can be applied.

For example, when a touch (contact touch or a proximity touch) with the TOLED is detected, the controller 180 may provide control to select or run at least one image on an image list displayed on the TOLED 155 according to a type of the touch or a touch duration.

Hereinafter, a method for controlling information displayed on a different display unit or on the LCD 156 when a touch is applied to the TOLED 155 exposed in an overlaid configuration will now be described based on input methods discriminated by a touch, a long touch, a long touch & dragging, and the like.

In the overlaid configuration (i.e., the mobile terminal is in a closed configuration or the folder part is closed), the TOLED 155 is disposed to be overlaid on the LCD 156. In this configuration, if a touch, namely, a long touch (e.g., a touch continued for longer than two or three seconds), which is different from the touch for controlling the image displayed on the TOLED 155, is detected, the controller 180 controls to select at least one image on the image list displayed on the LCD 156 according to the detected touch input. The result according to execution of the selected image is displayed on the TOLED 155.

The long touch may be used to selectively move a desired one of the entities displayed on the LCD 156 to the TOLED 155 (without execution of a corresponding operation). Namely, when the user makes a long touch on one region of the TOLED 155 corresponding to a particular entity of the LCD 156, the controller 180 controls to move the corresponding entity of the LCD 156 to the TOLED 155 and display it on the TOLED 155. Meanwhile, an entity displayed on the TOLED 155 may be also moved to be displayed on the LCD 156 according to a certain touch input, e.g., flicking, swirling, or the like, with respect to the TOLED 155. At a lower left portion, FIG. 5 shows an example where the menu item No. 2 displayed on the LCD 156 has been moved to be displayed on the TOLED 155.

When a drag is detected together with a long touch, the controller 180 may control to display, for example, a preview screen image of a selected image according to a function related to the image selected by the long touch on the TOLED 155. At the lower portion, FIG. 5 shows the case where a preview (a photo image of a man) of the menu No. 2 (image file) has been performed.

With the preview screen image outputted, when dragging is additionally made on the TOLED 155 while the long touch is maintained, the controller 180 moves a select cursor (or a select bar) of the LCD 156 and displays an image selected by the select cursor on a preview screen (a photo image of a woman as shown at the lower right portion of FIG. 5). Thereafter, when the touch (long touch and dragging) ends, the controller 180 displays the first image selected by the long touch.

The touch operation (long touch and dragging) can be applied in the same manner when a sliding operation (an operation of a proximity touch corresponding to the dragging) together with a long proximity touch (i.e., a proximity touch continued for longer than at least two to three seconds).

When a touch operation other than the above-described operation is detected, the controller 180 may perform an operation in the same manner as the general touch control method.

A control method for a touch operation in the overlap form may be applied to a terminal having a single display. In addition, the control method can be also applicable to a folder type terminal having a dual-display and other terminals.

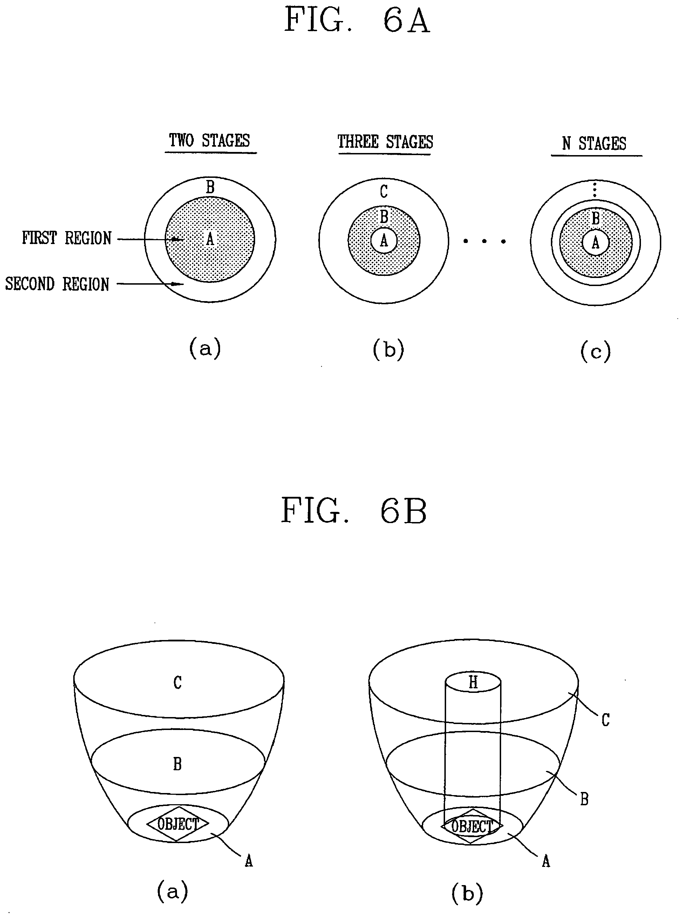

FIGs. 6A and 6B are conceptual views for explaining a proximity touch recognition region of the mobile terminal where a proximity signal is detected, and a haptic region of the mobile terminal where a haptic effect is generated, respectively.

FIG. 6A illustrates objects such as an icon, a menu item, etc., shown as a circular form for the sake of explanation. The region of the display unit 151 where the object is displayed may be divided into a first region (A) at the central region and a second region (B) surrounding the first region (A) as shown in FIG. 6A. The first region (A) and the second region (B) may be configured to generate a tactile effect, each having different strength or pattern. For example, when the second region (B) is touched, first vibration (e.g., vibration of the mobile terminal) may be outputted, and when the first region (A) is touched, second vibration stronger than the first vibration may be outputted.

If the proximity touch recognition region and the haptic region are to be simultaneously set at the region where the object is displayed, the haptic region where the haptic effect is generated and the proximity touch recognition region where a proximity signal is detected may be set to be different. Namely, the haptic region may be set to be smaller or larger than the proximity touch recognition region. For example, in FIG. 6A(a), the region including the first region (A) and the second region (B) may be set as the proximity touch recognition region, and the first region (A) alone may be set as the haptic region.

As shown in FIG. 6A(b), the region where the object is displayed may be divided into three regions (A, B, C), or as shown in FIG. 6A(c), the region where the object is displayed may be divided into the N (N≥4) number of regions. Each divided region may be configured to generate a haptic effect having a different strength or pattern. When the region where one object is displayed is divided into three or more regions, the haptic region and the proximity touch recognition region may be set to be different according to a usage environment.

It may be configured such that the size of the proximity touch recognition region varies according to a proximity depth. Namely, as shown in FIG. 6B(a), the corresponding proximity touch recognition region may be configured to become gradually smaller from 'C' to 'B' to 'A' according to the proximity depth with respect to the display unit 151. Or, conversely, the corresponding proximity touch recognition region may be configured to become gradually larger according to the proximity depth with respect to the display unit 151. In such a case, the haptic region may be set to have a certain fixed size (H) irrespective of the proximity depth with respect to the display unit 151, as shown in FIG. 6B(b).

When the region where the object is displayed on the mobile terminal is divided in order to set the haptic region or the proximity touch recognition region, the region may be divided by using various other methods such as a horizontal or vertical dividing method, a radially dividing method, and a combination of the methods, than the concentric circle-form dividing method.

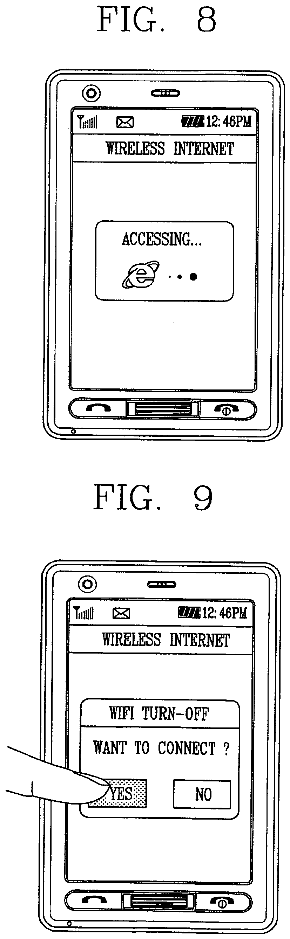

Returning to FIG. 1, when a browser is executed, the controller 180 determines whether or not the wireless Internet module 113 is activated. If the wireless Internet module 113 is activated by the user (e.g., as shown in FIG. 9) or by the controller 180, the controller 180 controls the wireless Internet module 113 to search for an access point (AP) that can be connected to. The activation of the wireless Internet module 113 may involve supplying power to the wireless Internet module 113 or turning on the wireless internet module 113 (e.g., turning on the wireless Internet mode or WIFI mode).

When the activation of the wireless Internet module 113 is selected by the user and there is information about a previously connected AP, the controller 180 may attempt to access the wireless Internet via the previously connected AP.

The information about the previously connected AP may be stored in an identifying module/device or in the memory 160, or may be received from a network via the wireless communication unit 110.

When the controller 180 fails to access the wireless Internet via the previously connected AP, the controller 180 may search for another AP. If a new AP is fond due to the search, the controller 180 may attempt to access the wireless Internet via the newly found AP.

If a plurality of APs are found due to the search result, the Internet access by the mobile terminal may be attempted via one of the APs selected by the user, or through an AP of high preference among the plurality of found APs. The preference may be determined by using a signal strength of a searched AP, a transmission speed of the Internet accessed via the searched AP, and a billing system in accessing the Internet via the searched AP. The preference may be set by the user.

For example, if the user sets an AP of the strongest signal strength, among the APs identified from the search, as a preference AP, the controller 180 may automatically attempt connection to the AP of the strongest signal strength among the identified APs.

Or, if the user sets an AP that charges the smallest fee for Internet access as a preference AP, the controller 180 may automatically attempt connection to that AP among the identified APs.

If no AP is discovered in the searching step, the controller 180 may deactivate the wireless Internet module 113.

If an AP that can be connected is not discovered nearby from the operation of searching for an AP, the wireless Internet module 113 may be deactivated (e.g., for a certain time duration) to reduce power consumption.

When the wireless Internet module 113 is deactivated because no AP is discovered in the searching step, the controller 180 may activate or re-activate the wireless Internet module 113 at certain time intervals, or may detect a change of the location of the mobile terminal, activate the wireless Internet module 113, and search for an AP that can be connected.

Although an AP that can be connected is not discovered nearby from the operation of searching for an AP, an AP may be discovered according to the occurrence of an event (e.g., the lapse of time, a change of the location of the mobile terminal, etc.). Thus, when the occurrence of an event is detected, the wireless Internet module 113 may be activated to search for an AP that can be connected.

The controller 180 may search for an AP by using map data including the location of APs in the searching step. The controller 180 may generate a list of APs that can be searched for at the location of the mobile terminal 100 by comparing the location information of the APs included in the map data and the location of the mobile terminal 100 detected by the location information module 115. The controller 180 may display the information (including the generated list) about the APs that can be searched at the current location based on the map data on the display unit 151, and search for an AP that can be actually connected according to a user input.

As shown in FIG. 1, the wireless communication unit 110 may receive information about a previously connected AP. In addition, the wireless communication unit 110 may receive map data including the location of APs from a server.

As shown in FIG. 1, the wireless Internet module 113 searches for an AP that can be connected to, and when such an AP is found, the wireless Internet module 113 accesses the Internet via that AP. The wireless Internet module 113 may be activated or deactivated by the controller 180, as needed.

As shown in FIG. 1, the user input unit 130 receives a signal for selecting whether or not to activate the wireless Internet from the user. Or, when a plurality of APs are discovered according to the search result, the user input unit 130 may receive a signal for selecting at least one of the plurality of searched APs, e.g., from the user.

As shown in FIG. 1, the memory 160 may store information about the previously connected AP. In addition, the memory 160 may store the map data including the location of the APs including the previously connected AP.

As shown in FIG. 1, the location information module 115 may detect the current location of the mobile terminal 100. The controller 180 may determine a change in the location of the mobile terminal 100 via the location information module 115. In a situation where the wireless Internet module 113 is deactivated because there is no AP according to the search result, when the location of the mobile terminal 100 has been changed by more than a pre-set degree, the controller 180 may activate the wireless Internet module 113 to search for an AP.

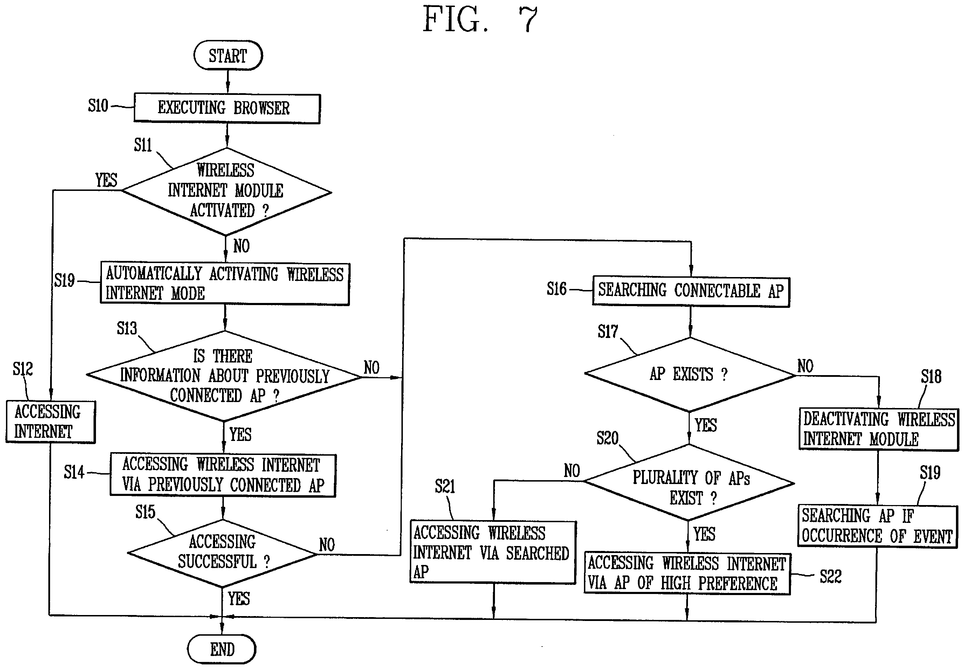

FIG. 7 is a flow chart illustrating a method for accessing the wireless Internet by a mobile terminal according to an embodiment of the present invention. The method of FIG. 7 is implemented by the mobile terminal 100 discussed herein; however, the invention is not limited thereto and the method can be implemented by other terminals or suitable devices.

When the user executes the browser to access the Internet while the mobile terminal 100 is operated (S10), the controller 180 determines whether or not the wireless Internet module 113 has been activated (S11).

As described above, the wireless Internet technique allowing the wireless Internet module 113 to access the Internet may include a WLAN (Wireless LAN) (Wi-Fi), Wibro (Wireless broadband), Wimax (World Interoperability for Microwave Access), HSDPA (High Speed Downlink Packet Access), etc.

When it is determined that the wireless Internet module 113 has been activated, the controller 180 may access the Internet by using the activated wireless Internet module 113 (S12).

When is determined that the wireless Internet module 113 has not been activated, the controller 180 activates the wireless Internet module 113 to search for an AP that can be connected to, in order to access the Internet (S16).

When the controller 180 activates the wireless Internet module 113, the controller 180 may automatically activate the wireless Internet module 113 (S9).

When the controller 180 automatically activates the wireless Internet module 113, the user of the mobile terminal 100 may automatically access the wireless Internet by simply manipulating execution of the browser. In this case, although the wireless Internet module 113 is in a deactivated state when the browser is executed, the user may access the wireless Internet without any additional manipulation to activate the wireless Internet module 113.

As a variation, the user may input a command to activate (or not to activate) the wireless Internet module 113. After the user inputs a signal to activate the wireless Internet module 113, the controller 180 may activate the wireless Internet module 113. When the user selects activation of the wireless Internet module 113 via the user input unit 130, the controller 180 can activate the wireless Internet module 113.

If the user does not select activation of the wireless Internet module 113 via the user input unit 130, the controller 180 may terminate the browser and terminate attempting of Internet access.

The controller 180 may activate the wireless Internet module 113 to search information about an AP that can be connected to (S16).

The AP information may refer to information used or required for the mobile terminal 100 to access the Internet via APs, such as information about a previously connected AP to access the wireless Internet, the location and signal strength of each AP located near the mobile terminal 100, a billing system, the number of previous connections by the user, the transmission speed of the Internet accessed via each AP, etc.

If the wireless Internet module 113 has not been activated at step S11 or if the wireless internet module 113 is automatically activated at step S9 (optional step), it is checked (e.g., by the controller 180) whether there is information about a previously connected AP (S13). If there is information about a previously connected AP, accessing the wireless Internet may be attempted via the previously connected AP (S14).

If accessing the wireless Internet via the previously connected AP fails (S15), the wireless Internet module 113 may be configured to or activated to search for an AP that can be connected to (S16).

In the step (S16) of searching for an AP that can be connected to, an AP may be searched by using the map data including the location of APs. A list of APs that can be searched at the location of the mobile terminal 100 may be generated by comparing the location information of the APs included in the map data and the location (e.g., current location) of the mobile terminal 100 detected by the location information module 115.

The information of APs (including the generated list) that can be searched at the current location based on the map data can be displayed on the display unit 151, and an AP that can be actually connected to may be searched according to a user input.

The map data may be stored in the memory 160 or received from the server via the wireless communication unit 110.

If no AP is found after searching for an AP that can be connected at step S17, the wireless Internet module 113 may be deactivated and power consumption may be reduced (S18). By reducing power consumption associated with activating the wireless Internet module 113, the whole power consumption of the mobile terminal can be reduced.

When the wireless Internet module 113 is deactivated because no AP is searched at step S18, if an event occurs additionally, the wireless Internet module 113 is activated to search for an AP (S19). The additionally occurring event for triggering an AP search in step S19 may include one or more of the following: the lapse of a certain time, the movement of the location of the mobile terminal 100, inputting of a signal for requesting research of an AP by the user, etc.

For example, the wireless Internet module 113 may be activated at certain time intervals to search for an AP that can be connected to. The certain time intervals may be shortened or lengthened with the lapse of time. In another example, when the location of the mobile terminal is changed, the wireless Internet module 113 may be activated to search for an AP that can be connected to.

If it is determined that there is an AP that can be connected to at the changed location of the mobile terminal by comparing the changed location of the mobile terminal and the map data, the wireless Internet module 113 may be activated to search for an AP.

If a plurality of APs are searched according to connectable AP search result at step S20, accessing the wireless Internet may be attempted through an AP of high preference (S22). Or, accessing the wireless Internet may be attempted via an AP selected by the user from the plurality of searched APs.

If one AP is searched according to the connectable AP search result at step S20, accessing the wireless Internet may be attempted via the searched AP (S21). For instance, at step S19, S21 or S22, the wireless Internet module 113 may successfully connected to an AP through which the Internet may be accessed.

FIGs. 8 to 13 are examples of views showing accessing of the wireless Internet by executing a browser of the mobile terminal according to an embodiment of the present invention. The features can be implemented in the mobile terminal 100 or other suitable device.

As shown in FIG. 8, when the Internet browser of the mobile terminal 100 is operated, the controller 180 of the mobile terminal determines whether or not the wireless Internet module 113 has been activated. When the wireless Internet module 113 has been activated, the mobile terminal 100 attempts accessing the Internet via the activated wireless Internet module 113. The display unit 151 can display an indication that the terminal is attempting to access the Internet as shown.

As shown in FIG. 9, if the wireless Internet module 113 of the mobile terminal 100 has not been activated, the controller 180 may request input from a user as to whether the wireless Internet module 113 is to be activated or not. In FIG. 9, the Internet is accessed by using WiFi, and as the Internet communication technique, Wibro (Wireless broadband), Wimax (World Interoperability for Microwave Access), HSDPA (High Speed Downlink Packet Access), etc., may be also used.

As shown in the example of FIG. 9, if the wireless Internet module 113 has not been activated, the controller 180 requests a user's input indicating whether or not the wireless Internet module 113 is to be activated, but the controller 180 may automatically activate the wireless Internet module 113 without a user input. The display unit 151 displays this process.

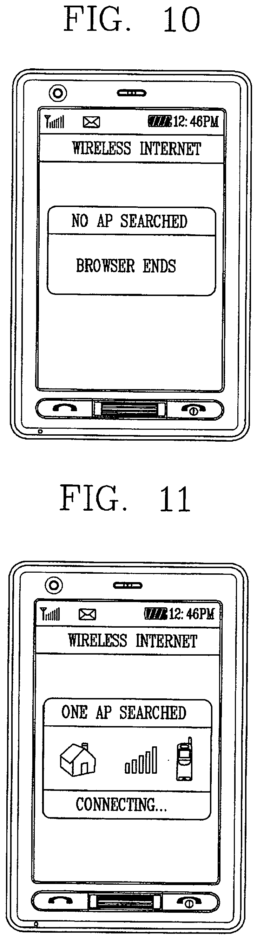

As shown in FIG. 10, if no AP is searched (e.g., if the AP search did not find an AP that can be connected to), the controller 180 may deactivate the wireless Internet module 113 and the display unit 151 can display this process. Thus, power consumption of the mobile terminal 100 can be reduced.

In FIG. 10, the controller 180 terminates the Internet browser, but the controller 180 supports the Internet mode by using a web page stored in the memory 160, so that when the user selects a web page which has not been stored in the memory 160, the wireless Internet module 113 may be activated again.

As shown in FIG. 11, if one AP is searched (e.g., if the AP search results in finding one AP to be connected to), the controller 180 may attempt accessing the Internet via the searched AP. The display unit 151 can display this process.

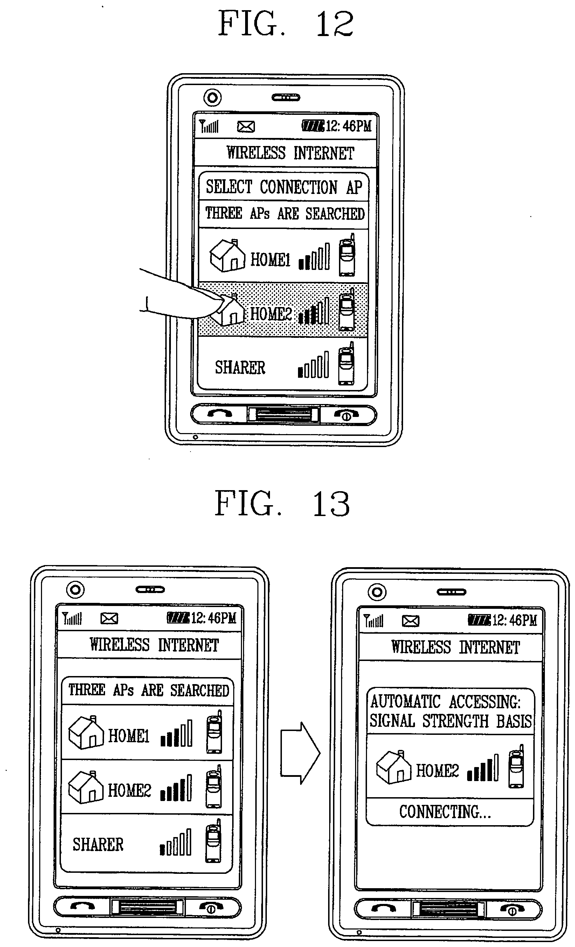

As shown in FIG. 12, if a plurality of APs are searched (e.g., if the AP search results in finding multiple APs that can be connected to), the controller 180 may receive one AP selected by the user from the plurality of found APs and attempt accessing the Internet via the user-selected AP. In another example, the user may select multiple APs among the found plurality of APs. In such cases, the controller may attempt the connection to an AP according to AP preference or priority or some other criteria.

Or, when a plurality of APs are found due to the searching step, the controller 180 may attempt accessing the Internet via an AP of high preference among the plurality of searched APs.

The preference, by which the controller 180 may attempt to connect to an AP, may be determined by using a signal strength of the searched AP, a transmission speed of the Internet accessed via the searched AP, a billing system in accessing the Internet via the searched AP, the number of previous connections by the user, etc.

For example, as shown in FIG. 13, the preference may be determined by using the strength of a signal received from the AP. For instance, the controller 180 may determine to connect to the AP having the strongest signal strength among the multiple APs selected by the user. The display unit 151 can display this process.

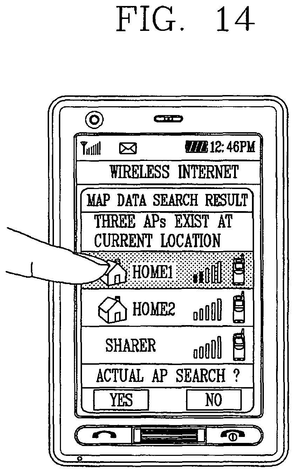

FIG. 14 is a view of a mobile terminal screen showing searching of an AP by using map data including location information of APs according to an embodiment of the present invention.

As shown in FIG. 14, the controller 180 may search for APs by using the map data including locations of APs. The map data may be stored in the memory 160 or received from the server via the wireless communication unit 110.

The step of searching for an AP by using the map data may include displaying information about APs that can be connected at a current location of the mobile terminal based on the map data, and searching for an AP that can be actually connected according to a user input.

The controller 180 may generate a list of APs that can be searched at the current location of the mobile terminal 100 by comparing the information about the locations of the APs included in the map data and the current location of the mobile terminal 100 detected by the location information module 115.

As shown in FIG. 14, the controller 180 may display the AP information (including the generated list of possible APs) corresponding to the current location of the mobile terminal based on the map data on the display unit 151, and search for an AP that can be actually connected according to a user input.

When the user selects a menu item or button for searching an actual AP in FIG. 14, this actual AP is searched by the same method as the general AP searching method of the wireless Internet module as discussed above with respect to FIGs. 8 to 13. Thus, the description of this method would be omitted for the sake of brevity.

As shown in FIG. 14, if the user selects at least one of the connectable APs displayed on the display unit 151 by using the map data, the wireless Internet module 113 attempts accessing the Internet via the selected AP.

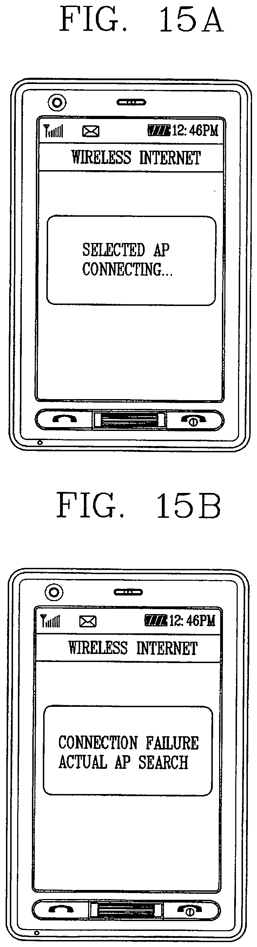

FIGs. 15A and 15B are examples of views showing re-searching of an AP when the connecting to the selected AP is not successful according to an embodiment of the present invention.

As shown in FIGs. 15A and 15B, if the selected AP is not actually searched/found or cannot be connected to by the mobile terminal 100, the controller 180 may display the connection failure on the display unit 151 and search for an actual/another AP again to which the terminal can be connected.

In a case that the selected AP is not actually searched/found or cannot be connected to may include a case of an error of the wireless Internet module 113, a case that the map data is not the same as location information of the actual AP, a case that the function of the AP has an error, a case of a temporary connection failure, etc. The display unit 151 can display the connection attempts.

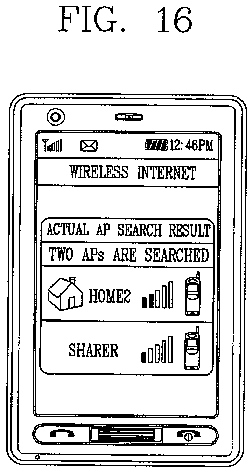

FIG. 16 is a view showing an example of displaying an actual AP search result according to an embodiment of the present invention.

As shown in FIG. 16, the display unit 151 displays the actual AP search result, and the user may select at least one of the APs and attempt accessing the Internet.

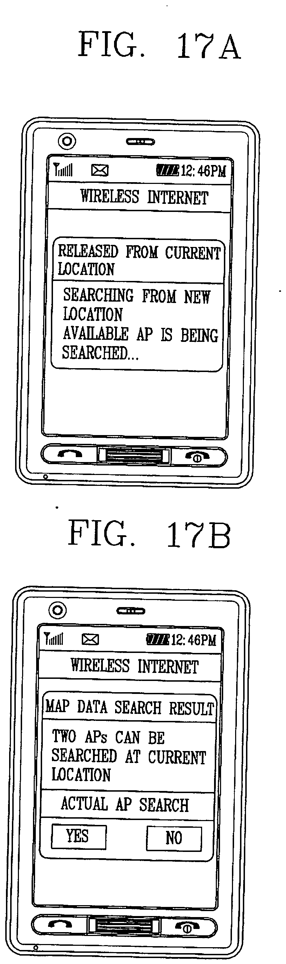

FIGs. 17A and 17B are views showing a case of detecting a change of the location of the mobile terminal after the wireless Internet module is deactivated because no AP has been found in the searching step according to an embodiment of the present invention.

As shown in FIGs. 17A and 17B, after the wireless Internet module 113 is deactivated because no AP has been found in the searching step, when a change in the location of the mobile terminal is detected, the controller 180 controls the wireless Internet module to search for an AP again.

The change in the location of the mobile terminal 100 may be detected by the location information module 115. When the location information module 115 detects the change in the location of the mobile terminal 100, the controller 180 determines whether there is an AP that can be searched (e.g., an AP that can be connected to) at the changed location of the mobile terminal 100 by using the map data.

As shown in FIG. 17B, if it is determined that there are APs that can be searched (or connected to) at the changed location of the mobile terminal, the display unit 151 may display this list information of the APs that can be searched/connected at the changed location.

Or, if it is determined that there is an AP that can be searched/connected at the changed location on the map data, the controller 180 may receive a command indicating whether the AP that can be searched/connected is to be actually searched/connected, from the user.

The case that the user selects actually searching of the AP that can be searched is the same as the general searching process of the APs, so the description regarding FIGs. 8 to 13 applies.

The above-described method according to the embodiments of the present invention can be implemented as codes that can be read by a processor in a program-recorded medium. The medium that can be read by the processor includes a ROM, a RAM, a CD-ROM, a magnetic tape, a floppy disk, an optical data storage device, etc., and also includes implementation in the form of carrier waves (e.g., transmission via the Internet).

Although the invention has been discussed with connecting to the Internet, the invention is equally applicable to connecting to other networks such as intranet, extranet, etc.

The foregoing embodiments and advantages are merely exemplary and are not to be construed as limiting the present disclosure. The present teachings can be readily applied to other types of apparatuses. This description is intended to be illustrative, and not to limit the scope of the claims. Many alternatives, modifications, and variations will be apparent to those skilled in the art. The features, structures, methods, and other characteristics of the exemplary embodiments described herein may be combined in various ways to obtain additional and/or alternative exemplary embodiments.

As the present features may be embodied in several forms without departing from the characteristics thereof, it should also be understood that the above-described embodiments are not limited by any of the details of the foregoing description, unless otherwise specified, but rather should be construed broadly within its scope as defined in the appended claims, and therefore all changes and modifications that fall within the metes and bounds of the claims, or equivalents of such metes and bounds are therefore intended to be embraced by the appended claims.

## Claims

1. A method for accessing the wireless Internet using a mobile terminal (100) including a wireless Internet module, comprising:
when a browser of the mobile terminal is executed, determining (S11) whether to activate the wireless Internet module;
activating (S19) the wireless Internet module based on a result of the determining step; and
searching (S13 S22) for information about an access point, AP, that can be connected to after the wireless Internet module is activated;
**characterized by** further comprising the steps of:
if the searching step (S13 S22) finds a plurality of connectable APs, receiving, a selection from a user of the mobile terminal (100) of one or a plurality of APs from among the plurality of found connectable APs; and
if the user selects a plurality of APs, attempting (S22) to connect to an AP according to AP preference among the selected plurality of connectable APs so as to access the wireless Internet.

2. The method according to claim 1, wherein the preference is determined based on at least one of the following:
a signal strength of each found AP,
a transmission speed of the Internet accessible via each found AP,
a billing system in accessing the Internet via each found AP, and
the number of previous connections by a user.

3. The method according to any one of the preceding claims, further comprising: receiving from the user a setting of a preference according to which an AP is selected from among a plurality of APs.

4. The method according to any one of the preceding claims, wherein in the activating (S19) step, the wireless Internet module is automatically activated, or is activated according to a user input as to whether to activate the wireless Internet module.

5. A mobile terminal (100) comprising:
a wireless Internet module (110) configured to transmit and/or receive a signal to search for an access point, AP, that can be connected to; and
a controller (180) configured to determine whether to activate the wireless Internet module when a browser is executed, to activate the wireless Internet module based on the determination result, and to search for information about an AP that can be connected to after the wireless Internet module is activated,
**characterized in that**:
if the search by the controller finds a plurality of connectable APs, the controller (180) is further configured to receive, from a user of the mobile terminal (100), a selection of one or a plurality of APs from among the plurality of found connectable APs; and
if the user selects a plurality of APs, the controller (180) is further configured to attempt to connect to an AP according to AP preference among the selected plurality of connectable APs so as to access the wireless Internet.

6. The mobile terminal (100) according to claim 5, wherein the controller (180) is further configured to receive from the user a setting of a preference according to which an AP is selected from among a plurality of APs.

7. The mobile terminal (100) according to any one of claims 5 to 6, wherein the preference is determined based on at least one of the following:
a signal strength of each found AP,
a transmission speed of the Internet accessible via each found AP,
a billing system in accessing the Internet via each found AP, and
the number of previous connections by a user.

8. The mobile terminal (100) according to any one of claims 5 to 7, wherein if the search by the controller (180) finds no AP, the controller (180) is configured to deactivate the wireless Internet module.

9. The mobile terminal (100) according to any one of claims 5 to 8, wherein the controller (180) is further configured to re-activate the wireless Internet module at certain time intervals to search for an AP that can be connected to.

10. The mobile terminal (100) according to any one of claims 5 to 9, wherein when a location of the mobile terminal is changed, the controller (180) is further configured to re-activate the wireless Internet module to search for an AP that can be connected to.

11. The mobile terminal (100) according to any one of claims 5 to 10, wherein the controller (180) is configured to search for an AP by using map data including locations of APs.

12. The mobile terminal (100) according to any one of claims 5 to 11, wherein when the AP is searched by using the map data, the controller (180) is further configured to:
display information about APs that are available at a current location of the mobile terminal based on the map data; and
search for an AP that can be actually connected to by the mobile terminal, according to a user input.

13. The mobile terminal (100) according to any one of claims 5 to 12, wherein the wireless Internet module (110) is automatically activated, or is activated according to a user input as to whether to activate the wireless Internet module (110).

## Patentansprüche

1. Verfahren zum Zugreifen auf das drahtlose Internet unter Verwendung eines mobilen Endgeräts (100), das ein drahtloses Internetmodul aufweist, umfassend:
wenn ein Browser des mobilen Endgeräts ausgeführt wird, Bestimmen (S11), ob das drahtlose Internetmodul zu aktivieren ist;
Aktivieren (S19) des drahtlosen Internetmoduls basierend auf einem Ergebnis des Bestimmungsschritts; und
Suchen (S13 S22) nach Information über einen Zugriffspunkt, AP, mit dem sich verbunden werden kann nachdem das drahtlose Internetmodul aktiviert wurde;
**gekennzeichnet durch** ferner umfassend die Schritte:
falls der Suchschritt (S13 S22) eine Vielzahl von verbindbaren APs findet, Empfangen einer Auswahl eines oder einer Vielzahl von APs aus der Vielzahl von gefundenen verbindbaren APs von einem Benutzer des mobilen Endgeräts (100); und
falls der Benutzer eine Vielzahl von APs auswählt, Versuchen (S22), sich mit einem AP gemäß einer AP-Präferenz unter der ausgewählten Vielzahl von verbindbaren APs zu verbinden, um so auf das Drahtlose Internet zuzugreifen.

2. Verfahren nach Anspruch 1, wobei die Präferenz basierend auf zumindest einem der folgenden bestimmt wird:
einer Signalstärke jedes gefundenen APs,
einer Übertragungsgeschwindigkeit des Internets, auf das über jeden gefundenen AP zugreifbar ist,
einem Abrechnungssystem beim Zugreifen auf das Internet über jeden gefundenen AP, und
der Anzahl von vorherigen Verbindungen durch einen Benutzer.

3. Verfahren nach einem der vorhergehenden Ansprüche, ferner umfassend:
Empfangen einer Festlegung einer Präferenz von dem Benutzer, gemäß der ein AP aus einer Vielzahl von APs ausgewählt wird.

4. Verfahren nach einem der vorhergehenden Ansprüche, wobei in dem Aktivierungsschritt (S19) das drahtlose Internetmodul automatisch aktiviert wird oder gemäß einer Benutzereingabe aktiviert wird, ob das drahtlose Internetmodul zu aktivieren ist.

5. Mobiles Endgerät (100) umfassend:
ein drahtloses Internetmodul (110), das dazu ausgebildet ist, ein Signal zu übertragen und/oder zu empfangen, um nach einem Zugangspunkt, AP, zu suchen, mit dem sich verbunden werden kann; und
eine Steuerung (180), die dazu ausgebildet ist, zu bestimmen, ob das drahtlose Internetmodul zu aktivieren ist, wenn ein Browser ausgeführt wird, das drahtlose Internetmodul basierend auf dem Bestimmungsergebnis zu aktivieren und nach Information über einen AP zu suchen, mit dem sich verbunden werden kann nachdem das drahtlose Internetmodul aktiviert wurde,
**dadurch gekennzeichnet, dass**:
falls die Suche durch die Steuerung eine Vielzahl von verbindbaren APs findet, die Steuerung (180) ferner dazu ausgebildet ist, von einem Benutzer des mobilen Endgeräts (100) eine Auswahl von einem oder einer Vielzahl von APs aus der Vielzahl von gefundenen verbindbaren APs zu empfangen; und
falls der Benutzer eine Vielzahl von APs auswählt, die Steuerung (180) ferner dazu ausgebildet ist, zu versuchen, sich mit einem AP gemäß einer AP-Präferenz unter der ausgewählten Vielzahl von verbindbaren APs zu verbinden, um so auf das drahtlose Internet zuzugreifen.

6. Mobiles Endgerät (100) nach Anspruch 5, wobei die Steuerung (180) ferner dazu ausgebildet ist, von dem Benutzer eine Festlegung einer Präferenz zu empfangen, gemäß welcher ein AP aus einer Vielzahl von APs ausgewählt wird.

7. Mobiles Endgerät (100) nach einem der Ansprüche 5 bis 6, wobei die Präferenz basierend auf zumindest einem der folgenden bestimmt wird:
einer Signalstärke von jedem gefundenen AP,
einer Übertragungsgeschwindigkeit des Internets, auf das über jeden gefundenen AP zugegriffen werden kann,
einem Abrechnungssystem beim Zugreifen auf das Internet über jeden gefundenen AP, und
der Anzahl von vorhergehenden Verbindungen durch einen Benutzer.

8. Mobiles Endgerät (100) nach einem der Ansprüche 5 bis 7, wobei, falls die Suche durch die Steuerung (180) keinen AP findet, die Steuerung (180) dazu ausgebildet ist, das drahtlose Internetmodul zu deaktivieren.

9. Mobiles Endgerät (100) nach einem der Ansprüche 5 bis 8, wobei die Steuerung (180) ferner dazu ausgebildet ist, das drahtlose Internetmodul zu bestimmten Zeitintervallen zu reaktivieren, um nach einem AP zu suchen, mit dem sich verbunden werden kann.

10. Mobiles Endgerät (100) nach einem der Ansprüche 5 bis 9, wobei, wenn ein Ort des mobilen Endgeräts sich ändert, die Steuerung (180) ferner dazu ausgebildet ist, das drahtlose Internetmodul zu reaktivieren, um nach einem AP zu suchen, mit dem sich verbunden werden kann.

11. Mobiles Endgerät (100) nach einem der Ansprüche 5 bis 10, wobei die Steuerung (180) ferner dazu ausgebildet ist, nach einem AP zu suchen unter Verwendung von Kartendaten, die die Orte von APs aufweisen.

12. Mobiles Endgerät (100) nach einem der Ansprüche 5 bis 11, wobei, wenn der AP gesucht wird unter Verwendung der Kartendaten, die Steuerung (180) ferner dazu ausgebildet ist:
Information über APs anzuzeigen, die an einem derzeitigen Ort des mobilen Endgeräts verfügbar sind basierend auf den Kartendaten; und
nach einem AP zu suchen, mit dem das mobile Endgerät sich tatsächlich verbinden kann, gemäß einer Benutzereingabe.

13. Mobiles Endgerät (100) nach einem der Ansprüche 5 bis 12, wobei das drahtlose Internetmodul (110) automatisch aktiviert wird oder in Einklang mit einer Benutzereingabe aktiviert wird, ob das drahtlose Internetmodul (110) zu aktivieren ist.

## Revendications

1. Procédé pour accéder à Internet sans fil en utilisant un terminal mobile (100) incluant un module Internet sans fil, comprenant les étapes consistant à :
lorsqu'un navigateur du terminal mobile est exécuté,
déterminer (S11) s'il faut activer le module Internet sans fil ;
activer (S19) le module Internet sans fil sur la base d'un résultat de l'étape de détermination ; et
rechercher (S13, S22) des informations concernant un point d'accès, AP, auquel il est possible de se connecter après que le module Internet sans fil a été activé ;
**caractérisé en ce qu'**il comprend en outre les étapes consistant à :
si l'étape de recherche (S13, S22) trouve une pluralité d'AP auxquels il est possible de se connecter, recevoir une sélection d'un utilisateur du terminal mobile (100) d'un ou d'une pluralité d'AP parmi la pluralité d'AP trouvés auxquels il est possible de se connecter ; et
si l'utilisateur sélectionne une pluralité d'AP, essayer (S22) de se connecter à un AP conformément à une préférence d'AP parmi la pluralité sélectionnée d'AP auxquels il est possible de se connecter de façon à accéder à Internet sans fil.

2. Procédé selon la revendication 1, dans lequel la préférence est déterminée sur la base d'au moins l'un parmi ce qui suit :
une intensité de signal de chaque AP trouvé,
une vitesse de transmission d'Internet accessible via chaque AP trouvé,
un système de facturation en accédant à Internet via chaque AP trouvé, et
le nombre de connexions précédentes par un utilisateur.

3. Procédé selon l'une quelconque des revendications précédentes, comprenant en outre l'étape consistant à :
recevoir de l'utilisateur un réglage d'une préférence selon laquelle un AP est sélectionné parmi une pluralité d'AP.

4. Procédé selon l'une quelconque des revendications précédentes, dans lequel à l'étape d'activation (S19), le module Internet sans fil est automatiquement activé, ou est activé conformément à une entrée utilisateur s'il faut activer le module Internet sans fil.

5. Terminal mobile (100) comprenant :
un module Internet sans fil (110) configuré pour transmettre et/ou recevoir un signal pour rechercher un point d'accès, AP, auquel il est possible de se connecter ; et
un contrôleur (180) configuré pour déterminer s'il faut activer le module Internet sans fil lorsqu'un navigateur est exécuté, pour activer le module Internet sans fil sur la base du résultat de détermination, et pour rechercher des informations concernant un AP auquel il est possible de se connecter après que le module Internet sans fil a été activé,
**caractérisé en ce que** :
si la recherche par le contrôleur trouve une pluralité d'AP auxquels il est possible de se connecter, le contrôleur (180) est en outre configuré pour recevoir, depuis un utilisateur du terminal mobile (100), une sélection de l'un ou d'une pluralité d'AP parmi la pluralité d'AP trouvés auxquels il est possible de se connecter ; et
si l'utilisateur sélectionne une pluralité d'AP, le contrôleur (180) est en outre configuré pour essayer de se connecter à un AP conformément à une préférence d'AP parmi la pluralité sélectionnée d'AP auxquels il est possible de se connecter de façon à accéder à Internet sans fil.

6. Terminal mobile (100) selon la revendication 5, dans lequel le contrôleur (180) est en outre configuré pour recevoir de l'utilisateur un réglage d'une préférence selon laquelle un AP est sélectionné parmi une pluralité d'AP.

7. Terminal mobile (100) selon l'une quelconque des revendications 5 à 6, dans lequel la préférence est déterminée sur la base d'au moins l'un parmi ce qui suit :
une intensité de signal de chaque AP trouvé,
une vitesse de transmission d'Internet accessible via chaque AP trouvé,
un système de facturation en accédant à Internet via chaque AP trouvé, et
le nombre de connexions précédentes par un utilisateur.

8. Terminal mobile (100) selon l'une quelconque des revendications 5 à 7, dans lequel si la recherche par le contrôleur (180) ne trouve pas d'AP, le contrôleur (180) est configuré pour désactiver le module Internet sans fil.

9. Terminal mobile (100) selon l'une quelconque des revendications 5 à 8, dans lequel le contrôleur (180) est en outre configuré pour réactiver le module Internet sans fil à certains intervalles de temps pour rechercher un AP auquel il est possible de se connecter.

10. Terminal mobile (100) selon l'une quelconque des revendications 5 à 9, dans lequel lorsqu'un emplacement du terminal mobile est changé, le contrôleur (180) est en outre configuré pour réactiver le module Internet sans fil pour rechercher un AP auquel il est possible de se connecter.

11. Terminal mobile (100) selon l'une quelconque des revendications 5 à 10, dans lequel le contrôleur (180) est configuré pour rechercher un AP en utilisant des données de carte incluant des emplacements d'AP.

12. Terminal mobile (100) selon l'une quelconque des revendications 5 à 11, dans lequel lorsque l'AP est recherché en utilisant les données de carte, le contrôleur (180) est en outre configuré pour :
afficher des informations concernant les AP qui sont disponibles à un emplacement actuel du terminal mobile sur la base des données de carte ; et
rechercher un AP auquel le terminal mobile peut réellement se connecter, conformément à une entrée utilisateur.

13. Terminal mobile (100) selon l'une quelconque des revendications 5 à 12, dans lequel le module Internet sans fil (110) est automatiquement activé, ou est activé conformément à une entrée utilisateur s'il faut activer le module Internet sans fil (110).
